# EUROPÄISCHE PATENTSCHRIFT

(11) **EP 0 972 616 B1**
(45) Veröffentlichungstag und Bekanntmachung des Hinweises auf die Patenterteilung: **03.12.2003**
(21) Anmeldenummer: 99111566.8
(22) Anmeldetag: 15.06.1999
(51) Int. Cl.: B25H 3/02, B60R 11/06

(54) **Reparatursatz mit einem tragbaren Behälter**
Repair kit and its portable container
Nécessaire de réparation et sa cassette portable

(30) Priorität: 17.07.1998 DE 29812740 U
(43) Veröffentlichungstag der Anmeldung: 19.01.2000
(73) Patentinhaber: Continental Aktiengesellschaft, 30165 Hannover (DE)
(72) Erfinder: Frühauf, Kai, 30851 Langenhagen (DE); Kallwass, Karl-Heinz, 31867 Hülsede (DE); Westerkamp, Helge, 30171 Hannover (DE); Oldenettel, Holger, 30826 Garbsen (DE); Breede, Marcus, 30167 Hannover (DE)

(56) Entgegenhaltungen:
- DE-A- 19 545 935
- US-A- 4 187 058
- US-A- 4 389 166
- US-A- 4 621 984
- US-A- 4 830 579
- US-A- 5 051 068
- US-A- 5 310 103
- US-A- 5 531 300
- PATENT ABSTRACTS OF JAPAN vol. 1998, no. 05, 30. April 1998 (1998-04-30) & JP 10 016518 A (HONDA MOTOR CO LTD), 20. Januar 1998 (1998-01-20)

## Beschreibung

Die Erfindung betrifft einen Reparatursatz gemäß dem Oberbegriff des Anspruchs 1.

Bei Reifenpannen besteht in aller Regel das Problem, daß - wie beispielsweise bei einem PKW bisher üblich - ein gefüllter und auf einer Felge montierter Reservereifen mitgeführt werden muß, der dann anstelle des Rades mit dem defekten Reifen montiert wird, wonach der defekte Reifen in dem für den Reservereifen vorgesehenen Stauraum im Fahrzeug befestigt werden und später einer Reparatur zugeführt werden muß. Hierzu ist es nicht nur oft notwendig, ein beladenes Fahrzeug auszuräumen, um an den entsprechenden Stauraum zu gelangen, sondern es muß auch das Fahrzeug selbst mit Wagenhebern aufgebockt und eine umständliche Reparaturarbeit durchgeführt werden.

Bei Fahrzeugen, die nicht mit schlauchlosen Reifen versehen sind, wie etwa bei Fahrrädern, ist es bei einer Reifenpanne nötigt, mit umfangreichem Werkzeug nach der Montage des Reifens den Mantel von der Felge zu entfernen, den Schlauch zu entnehmen und mit entsprechend mitgeführtem Reparaturmaterial zu flicken. Danach muß der Reifen bzw. der Schlauch oft mehrfach aufgepumpt werden, um eine einigermaßen sichere Weiterfahrt zu gewährleisten. Neben der schwierigen Reparaturtätigkeit besteht bei dem bisher bekannten Verfahren der Nachteil, daß die notwendigen Reparaturmaterialien, wie etwa eine entsprechende Pumpe sowie Hebe- und Schraubwerkzeuge, sowie bei nächtlichen Pannen nötige Beleuchtungskörper, in oder bei den entsprechenden Fahrzeugen nur unvollständig oder gar nicht vorhanden oder an den unterschiedlichsten Stellen verstaut sind und lange gesucht werden müssen.

Ein Reparatursatz der eingangs genannten Art ist beispielsweise aus der US-PS 4,621,984 bekannt. Der Reparatursatz kann dazu verwendet werden, den Reifen eines Kraftfahrzeuges mit Hilfe des Kompressors aufzupumpen, um den durch Undichtigkeiten entstandenen Druckverlust im Reifen auszugleichen. Es ist ebenfalls möglich, den Reparatursatz zu verwenden, um einen (z.B. durch einen Nagel) beschädigten Reifen abzudichten. In diesem Fall wird zur Abdichtung der Schadstelle ein Dichtmittel in den Reifen eingebracht und der Reifen mit Hilfe des Kompressors des Reparatursatzes aufgepumpt. Das Dichtmittel ist in einem besonderen Behälter untergebracht und wird zusätzlich zum Reparatursatz im Fahrzeug verstaut. Dies kann dazu führen, dass der Dichtmittelbehälter unter Umständen aufwendig gesucht werden muss, da es im Normalbetrieb eines Kraftfahrzeuges selten zu Reifenpannen kommt und es daher vergessen werden kann, wo der Dichtmittelbehälter verstaut wurde.

Für die Erfindung bestand nun die Aufgabe, all diese Nachteile zu vermeiden und einen ständig einsetzbaren, vollständigen und leicht zu handhabenden Reparatursatz bereitzustellen, mit dem auf das Mitführen eines auf eine Felge aufgezogenen Reserverades oder auf die ständige Kontrolle anderer Reparaturmaterialien wie Schläuche, verschiedene Werkzeugschlüssel, Wagenheber etc. verzichtet werden kann.

Gelöst wird diese Aufgabe durch die Merkmale des Hauptanspruchs.

Ein solcher Reparatursatz gewährleistet die ständige und sichere Verfügbarkeit aller Werkzeuge und allen Zubehörs zur Instandsetzung von Reifen, läßt sich leicht an einer zugänglichen Stelle im oder am Fahrzeug deponieren und benötigt als mitzuführendes Reparaturmaterial lediglich ein weiteres im Behälter enthaltenes Behältnis mit einem einfüllbaren selbsttätigen Dichtmittel, was in den Reifen eingefüllt bzw. eingesprüht wird und dann von innen durch Aufschäumen oder durch Polymerisation einen Dichtfilm auf die Reifeninnenseite legt. Selbsttätige Dichtmittel als solche in Form von Spray oder auch als an der Luft härtende Flüssigkeiten sind im Stand der Technik bekannt.

Vorteilhafterweise besteht die Kompressoreinheit aus einem Kompressormotor, einem Verdichter (Kompressor), einer Ventil- und einer Schalt- oder Steuereinheit und einer als Manometer ausgebildeten Druckanzeige, wobei das Manometer in einer Ausnehmung der Außenwand des Behälters angeordnet ist.

Durch eine solche Ausbildung werden nach dem Einfüllen des selbsttätigen Dichtmittels sämtliche zum Wiederaufpumpen des Reifens notwendige Geräteteile - ohne umständliche Anschlußarbeiten - bereitgestellt und können einfach bedient und kontrolliert werden.

Vorteilhafterweise enthält ein Teilraum für Zubehör einen Druckschlauch mit einem an einem Ende angeordneten Ventilanschluß für ein Reifenventil, wobei der Teilraum für Zubehör mit einer Öffnung zum Teilraum für die Kompressoreinheit ausgebildet ist, und das andere Ende des Druckschlauches durch die Öffnung geführt und mit der Kompressoreinheit verbunden ist.

Durch eine solche Ausbildung vereinfacht sich die Verfahrensweise im Reparaturfall wiederum, wobei lediglich der Ventilanschluß auf dem Reifenventil zu befestigen ist, ohne daß etwa Schlauchleitungen oder Verlängerungen gelegt und miteinander verbunden werden müßten.

Die Einsatzmöglichkeiten des Reparatursatzes lassen sich vorteilhafterweise dadurch erweitern, daß der Teilraum für Zubehör weitere und mit dem Ventilanschluß für ein Reifenventil austauschbare Ventilanschlüsse enthält. Hierdurch kann der Reparatursatz beispielsweise für den Freizeitbereich genutzt werden, wobei etwa neben PKW- und Fahrradreifen auch Schlauchboote, Luftmatratzen oder ähnliche flexible Druckkörper leicht aufgepumpt werden können.

Eine weitere vorteilhafter Ausbildung besteht darin, daß ein Teilraum für Zubehör ein Kabel für den Anschluß des Kompressormotors an eine Stromquelle mit einem an einem Ende angeordneten Kabelstecker enthält und der Teilraum für Zubehör mit einer Öffnung zum Teilraum für die Kompressoreinheit ausgebildet ist, wobei das andere Ende des Anschlußkabels durch die Öffnung geführt und mit der Steuereinheit und/oder dem Kompressormotor verbunden ist.

Auch hier ergibt sich im Hinblick auf die notwendige Stromzufuhr der Vorteil, daß lediglich der Kabelstecker entnommen werden muß und eine Stromquelle anzuschließen ist, ohne daß Kabelverbindungen, Überbrückungen oder Verlängerungen geschaltet werden müßten. Eine besonders einfache Handhabung erreicht man dadurch, daß der Kabelstecker als Stecker für die Aufnahmedose eines Zigarettenanzünders in einem Kraftfahrzeug ausgebildet ist.

Eine weitere vorteilhafte Ausbildung besteht darin, daß ein Teilraum für Zubehör eine Stromquelle enthält, die mit der Steuereinheit und/oder dem Kompressormotor verbunden ist. Hierdurch läßt sich der Reparatursatz auch für Fahrzeuge ohne eigene Stromversorgung nutzen, beispielsweise für Fahrräder oder ähnliches.

Vorteilhafterweise enthält eine Teilraum für Zubehör einen in einer Ausnehmung der Außenwand des Behälters angeordneten Scheinwerfer, der schaltbar mit der Stromquelle oder mit dem Anschlußkabel verbunden ist. Hierdurch wird das Arbeiten in der Dunkelheit erleichtert, wobei das zusätzliche Mitführen von Taschenlampen etc. entfällt und durch die Anordnung im kofferförmigen Behälter ein sicherer Stand für den Scheinwerfer gewährleistet ist.

Vorteilhafterweise enthält ein Teilraum für Zubehör Reparaturmaterial für Reifen und/oder andere aufblasbare Körper, insbesondere ein Behältnis mit einem in den Reifen einfüllbaren selbsttätigen Dichtmittel. Der Dichtmittelbehälter kann mit einem entsprechend ausgebildeten Einfüllschlauch versehen sein, so daß zunächst das Dichtmittel mit einem Ventiladapter an das Reifenventil angeschlossen wird und nach Eintreten der gewünschten Reaktion, d. h. nach Ausbildung einer dichtenden Schicht innerhalb des Reifens, der Kompressorschlauch angeschlossen werden kann.

Vorteilhafterweise ist der Behälter an mindestens einer Außenseite mit Tragrollen versehen, so daß ein einfaches Verschieben und ein einfacher Transport ermöglicht wird.

In einer weiteren vorteilhaften Ausbildung ist der Behälter an mindestens einer Außenseite mit Einrichtungen zum lösbaren Befestigen des Behälters in oder an einem Fahrzeug versehen. Damit läßt sich der Behälter, ähnlich wie etwa Warndreieck oder Verbandskasten, an geeigneter Stelle im Fahrzeug unterbringen und kann leicht und ohne besondere Werkzeuge, insbesondere aber ohne Entladen des Fahrzeuges, entnommen und genutzt werden. Solche Einrichtungen können z. B. als Schnapp- oder Karabinerhaken, als Klemmbügel, oder auch als Magnethalterungen ausgebildet werden.

Anhand eines Ausführungsbeispieles soll die Neuerung näher erklärt werden. Es zeigen:
- Fig. 1: eine perspektivische Rück- und Vorderansicht des neuerungsgemäßen Reparatursatzes mit einem tragbaren Behälter
- Fig. 2: eine Skizze mit den Teilräumen und dem Inhalt eines tragbaren Behälters für einen Reparatursatz

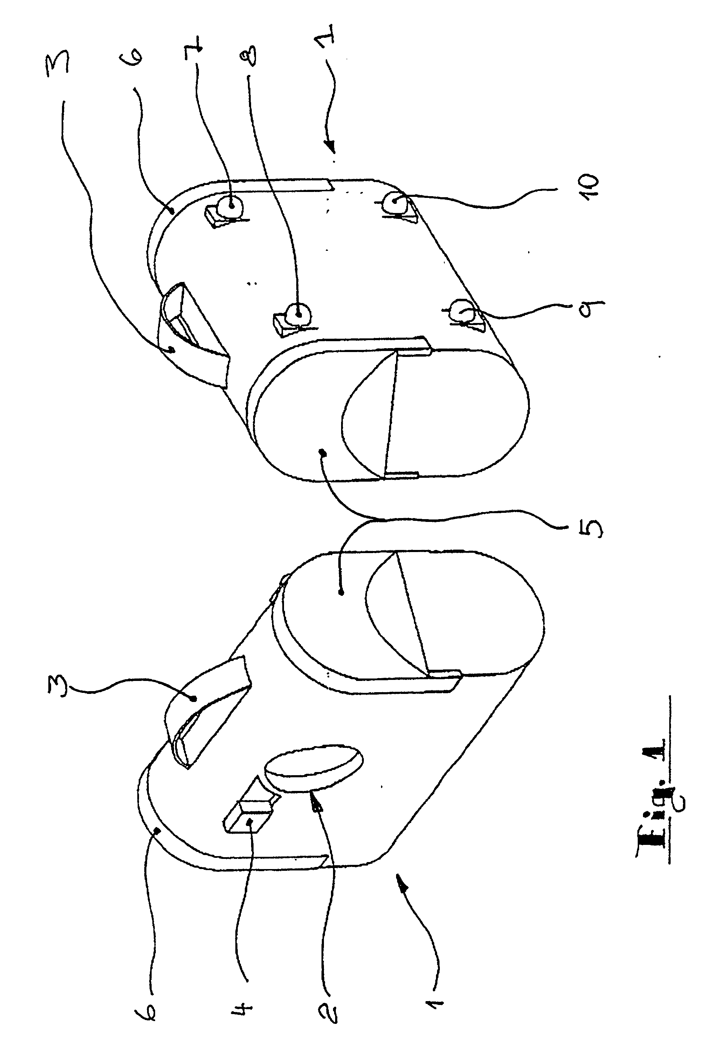

Die Figur 1 zeigt einen neuerungsgemäßen Reparatursatz mit einem tragbaren Behälter 1 in der perspektivischen Vor- und Rückansicht.

In der linksseitigen Vorderansicht erkennt man die Manometeröffnung 2, den Tragegriff 3, einen Schalter 4 für den Kompressorbetrieb sowie die beiden klappbaren Öffnungen 5 und 6 an den Seiten des Behälters. An der Unterseite des Behälters befinden sich die Tragrollen 7, 8, 9 und 10, die für eine sichere Auflage und einen einfachen Transport des Behälters sorgen.

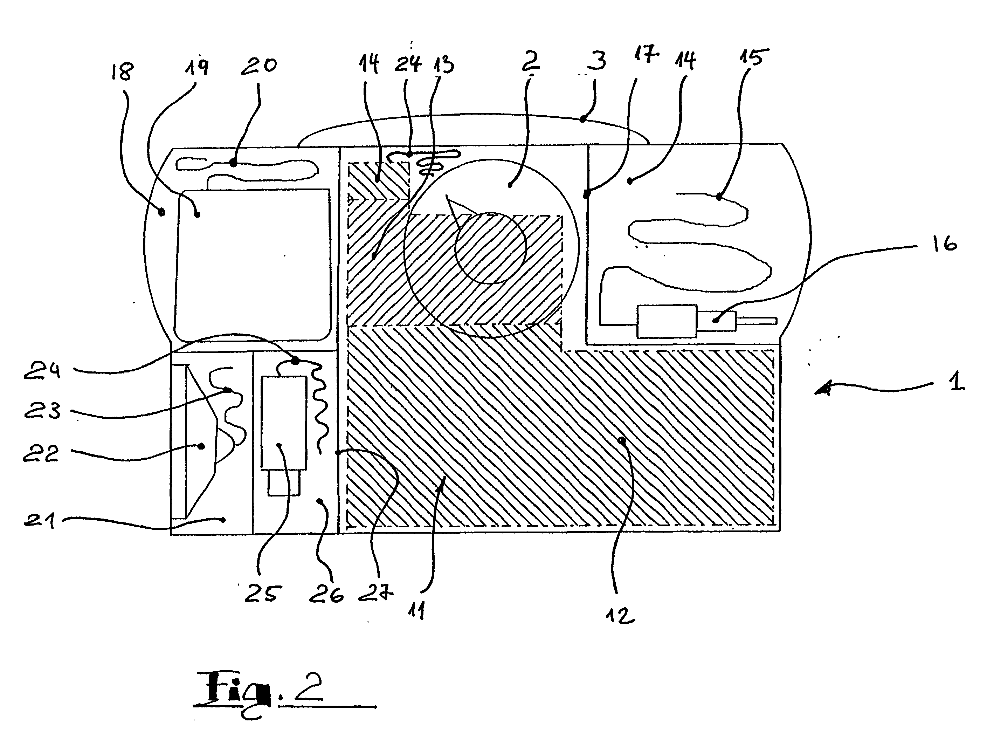

Die Figur 2 zeigt die Skizze eines tragbaren Behälters für einen Reparatursatz mit seiner Innenaufteilung. Der Behälter weist hierbei eine Kompressoreinheit 11 auf, die aus einem mit einen Kompressormotor verbundenen Verdichter 12, einer Ventileinheit 13 und einer Schaltoder Steuereinheit 14 besteht. Angeschlossen an die Ventileinheit ist die Druckanzeige 2, die in einer Ausnehmung der Außenwand des Behälters 1 angeordnet ist.

Der Teilraum 14 beinhaltet einen zusammengelegten Druckschlauch 15, der an einem Ende einen Ventilanschluß 16 für ein Reifenventil aufweist. Das andere Ende des Druckschlauches ist mit der Kompressoreinheit verbunden und durch eine Öffnung der Trennwand 17 geführt, die jedoch hier nicht weiter dargestellt ist. Ein weiterer Teilraum 18 beinhaltet ein separates Behältnis 19 für ein in den Reifen einfüllbares selbsttätiges Dichtmittel. Das Behältnis 19 kann hierbei mit einem Schlauch 20 ebenfalls an das Reifenventil angeschlossen werden.

Ein weiterer Teilraum 21 beinhaltet ein in einer Ausnehmung der Seitenwand angeordneten Scheinwerfer 22, der über ein Kabel 23 mit dem Kabel 24 verbunden ist, über das die Kompressoreinheit an eine Stromquelle angeschlossen ist. Das Kabel 24 weist an einem Ende einen für eine Aufnahmedose eines Zigarettenanzünders geeigneten Kabelstecker 25 auf, der samt Kabel in einem Teilraum 26 angeordnet ist, wobei das Kabel 24 über eine hier nicht näher dargestellte Öffnung in der Trennwand 27 mit der Steuereinheit oder dem Kompressormotor verbunden ist.

## Patentansprüche

1. Reparatursatz mit einem tragbaren Behälter zur Aufnahme von Bordwerkzeugen und Arbeitsgeräten für Fahrzeuge, insbesondere zur Aufnahme von Werkzeugen, Arbeitsgeräten und Zubehör zur Instandsetzung von Reifen, wobei der Behälter in Form eines Koffers ausgebildet ist und auf mindestens einer seiner Außenseiten einen Tragegriff aufweist, wobei
der Behälter (1, 28) mehrere und mindestens teilweise mit klappbaren Öffnungen (6, 7, 38) versehene abgetrennte Teilräume für das Zubehör und mindestens einen Teilraum mit einer Kompressoreinheit (12) aufweist, und der Behälter an seinen Außenwänden angeordnete und von außen bedien- und sichtbare Schalt-, Steuerund Anzeigeeinrichtungen für den Betrieb der Arbeitsgeräte und / oder Werkzeuge beinhaltet,
**dadurch gekennzeichnet, dass**
ein Teilraum für Zubehör
ein Behältnis (19) mit einem in den Reifen einfüllbaren selbsttätigen Dichtmittel enthält.

2. Reparatursatz nach Anspruch 1, **dadurch gekennzeichnet, daß** die Kompressoreinheit aus einem Kompressormotor, einem Verdichter, einer Ventil- und einer Schalt- oder Steuereinheit und einer als Manometer ausgebildeten Druckanzeige (2, 34) besteht, wobei das Manometer in einer Ausnehmung der Außenwand des Behälters angeordnet ist.

3. Reparatursatz nach Anspruch 1 oder 2, **dadurch gekennzeichnet, daß** ein Teilraum für Zubehör einen Druckschlauch (15, 37) mit einem an einem Ende angeordneten Ventilanschluß (16) für ein Reifenventil enthält, und der Teilraum für Zubehör mit einer Öffnung zum Teilraum für die Kompressoreinheit ausgebildet ist, wobei das andere Ende des Druckschlauches durch die Öffnung geführt und mit der Kompressoreinheit verbunden ist.

4. Reparatursatz nach Anspruch 3, **dadurch gekennzeichnet, daß** der Teilraum für Zubehör weitere und mit dem Ventilanschluß für ein Reifenventil austauschbare Ventilanschlüsse (39) enthält.

5. Reparatursatz nach Anspruch 1 bis 4, **dadurch gekennzeichnet, daß** ein Teilraum für Zubehör ein Kabel für den Anschluß des Kompressormotors an eine Stromquelle mit einem an einem Ende angeordneten Kabelstecker (35, 43) enthält, und der Teilraum für Zubehör mit einer Öffnung zum Teilraum für die Kompressoreinheit ausgebildet ist, wobei das andere Ende des Anschlußkabels durch die Öffnung geführt und mit der Steuereinheit und / oder dem Kompressormotor verbunden ist.

6. Reparatursatz nach Anspruch 5, **dadurch gekennzeichnet, daß** der Kabelstecker als Stecker für die Aufnahmedose eines Zigarettenanzünders in einem Kraftfahrzeug ausgebildet ist.

7. Reparatursatz nach Anspruch 1 bis 4, **dadurch gekennzeichnet, daß** ein Teilraum für Zubehör eine Stromquelle enthält, die mit der Steuereinheit und / oder dem Kompressormotor verbunden ist.

8. Reparatursatz nach Anspruch 1 bis 7, **dadurch gekennzeichnet, daß** ein Teilraum für Zubehör einen in einer Ausnehmung der Außenwand des Behälters angeordneten Scheinwerfer (22, 30) enthält, der schaltbar mit der Stromquelle oder mit dem Anschlußkabel verbunden ist.

9. Reparatursatz nach Anspruch 8, **dadurch gekennzeichnet, daß** der Scheinwerfer mit einer lösbaren Verbindung in einer Ausnehmung der Außenwand des Behälters angeordnet und mit einem Verlängerungskabel versehen ist.

10. Reparatursatz nach Anspruch 1 bis 9, **dadurch gekennzeichnet, daß** der Behälter an mindestens einer Außenseite mit Tragrollen (7 - 10) versehen ist.

11. Reparatursatz nach Anspruch 1 bis 10, **dadurch gekennzeichnet, daß** der Behälter an mindestens einer Außenseite mit Einrichtungen zum lösbaren Befestigen des Behälters in oder an einem Fahrzeug versehen ist.

## Claims

1. Repair kit, having a portable container for the accommodation of on-board tools and working implements for vehicles, more especially for the accommodation of tools, working implements and accessories for repairing tyres, the container being in the form of a case and having a carrying handle on at least one of its outer surfaces, the container (1, 28) having a plurality of separate compartments for the accessories, at least some of which compartments are provided with displaceable openings (6, 7, 38), and at least one compartment provided with a compressor unit (12), and the container including switching, controlling and displaying means for the operation of the working implements and/or tools, said means being disposed on the outer walls of the container and being operable and visible from the outside, **characterised in that** a compartment for accessories includes a reservoir (19) provided with a self-acting sealant which can be introduced into the tyre.

2. Repair kit according to claim 1, **characterised in that** the compressor unit comprises a compressor motor, a compressor, a valve unit and a switching or controlling unit and a pressure display (2, 34), which is in the form of a manometer, the manometer being disposed in a recess in the outer wall of the container.

3. Repair kit according to claim 1 or 2, **characterised in that** a compartment for accessories includes a pressure hose (15, 37) provided with a valve connection (16) for a tyre valve, which connection is disposed at one end, and the compartment for accessories is provided with an opening leading to the compartment for the compressor unit, the other end of the pressure hose extending through the opening and being connected to the compressor unit.

4. Repair kit according to claim 3, **characterised in that** the compartment for accessories includes additional valve connections (39) which are interchangeable with the valve connection for a tyre valve.

5. Repair kit according to claims 1 to 4, **characterised in that** a compartment for accessories includes a cable for connecting the compressor motor to a power source by means of a cable plug (35, 43) disposed at one end, and the compartment for accessories is provided with an opening leading to the compartment for the compressor unit, the other end of the connection cable extending through the opening and being connected to the control unit and/or the compressor motor.

6. Repair kit according to claim 5, **characterised in that** the cable plug is in the form of a plug for the receiver socket of a cigarette lighter in an automotive vehicle.

7. Repair kit according to claims 1 to 4, **characterised in that** a compartment for accessories includes a power source which is connected to the control unit and/or the compressor motor.

8. Repair kit according to claims 1 to 7, **characterised in that** a compartment for accessories includes a headlamp (22, 30), which is disposed in a recess in the outer wall of the container and is switchably connected to the power source or to the connection cable.

9. Repair kit according to claim 8, **characterised in that** the headlamp is disposed in a recess in the outer wall of the container with a detachable connection and is provided with an extension cable.

10. Repair kit according to claims 1 to 9, **characterised in that** the container is provided with bearing rollers (7 - 10) on at least one outer surface.

11. Repair kit according to claims 1 to 10, **characterised in that**, on at least one outer surface, the container is provided with means for the detachable mounting of the container in or on a vehicle.

## Revendications

1. Nécessaire de réparation comportant un récipient portable servant à loger des outils de bord et des appareils de travail pour véhicules, notamment pour loger des outils, des appareils de travail et des accessoires pour la réparation de pneumatiques, le récipient étant agencé sous la forme d'une mallette et possédant une poignée au moins sur l'une de ses faces extérieures, dans lequel
le récipient (1, 2B) comporte plusieurs espaces partiels séparés, qui sont pourvus au moins en partie d'ouvertures rabattables (6, 7, 38), pour les accessoires et au moins un espace partiel comportant une unité formant compresseur (12), et le récipient contient des dispositifs de commutation, de commande et d'affichage, qui sont disposés sur ses parois extérieures et peuvent être commandés et sont visibles de l'extérieur, pour le fonctionnement des appareils de travail et/ou des outils,
**caractérisé en ce que**
un espace partiel pour les accessoires contient un réceptacle (19) comportant un milieu d'étanchéité automatique pouvant être introduit dans les pneumatiques.

2. Nécessaire de réparation selon la revendication 1, **caractérisé en ce que** l'unité de compression est formée par un moto-compresseur, un compresseur, une unité à soupape, une unité de commutation ou de commande et une unité d'affichage de pression (2, 34) réalisée sous la forme d'un manomètre, le manomètre étant disposé dans un évidement de la paroi extérieure du récipient.

3. Nécessaire de réparation selon la revendication 1 ou 2, **caractérisé en ce qu'**un espace partiel pour des accessoires contient un tuyau résistant à la pression (15, 37) et comportant un raccord de soupape (16) disposé sur une extrémité, et que l'espace partiel pour les accessoires comporte une ouverture débouchant dans l'espace partiel pour l'unité formant compresseur, l'autre extrémité du tube résistant à la pression traversant l'ouverture et étant reliée à l'unité formant compresseur.

4. Nécessaire de réparation selon la revendication 3, **caractérisé en ce que** l'espace partiel pour les accessoires contient d'autres raccords de soupape (39), pouvant être échangés avec un raccord de soupape pour une soupape de pneumatique;

5. Nécessaire de réparation selon les revendications 1 à 4, **caractérisé en ce qu'**un espace partiel pour les accessoires contient un câble pour le raccordement du moto-compresseur à une source de courant au moyen d'un connecteur de câble (35, 43) disposé sur une extrémité et que l'espace partiel pour les accessoires est réalisé avec une ouverture débouchant dans l'espace partiel de l'unité formant compresseur, l'autre extrémité du câble de raccordement traversant l'ouverture et étant reliée à l'unité de commande et/ou au moto-compresseur.

6. Nécessaire de réparation selon la revendication 5, **caractérisé en ce que** le connecteur de câble est agencé sous la forme d'un connecteur pour le logement de réception d'un allume-cigare dans un véhicule automobile.

7. Nécessaire de réparation selon les revendications 1 à 4, **caractérisé en ce qu'**un espace partiel pour les accessoires contient une source de courant, qui est reliée à l'unité de commande et/ou au moto-compresseur.

8. Nécessaire de réparation selon les revendications 1 à 7, **caractérisé en ce qu'**un espace partiel pour les accessoires contient un projecteur (22, 30) disposé dans un évidement de la paroi extérieure du récipient et qui est relié d'une manière pouvant être commutée à la source de courant ou au câble de raccordement.

9. Nécessaire de réparation selon la revendication 8, **caractérisé en ce que** le projecteur est disposé avec une liaison amovible dans un évidement de la paroi extérieure du récipient et est équipé d'un câble de prolongation.

10. Nécessaire de réparation selon les revendications 1 à 9, **caractérisé en ce que** le récipient comporte au moins un côté extérieur comportant des galets de support (7-10).

11. Nécessaire de réparation selon les revendications 1 à 10, **caractérisé en ce que** le récipient comporte, sur au moins une face extérieure, au moins un dispositif pour la fixation amovible du récipient dans ou sur un véhicule.
